# EUROPÄISCHE PATENTSCHRIFT

(11) **EP 0 773 912 B1**
(45) Veröffentlichungstag und Bekanntmachung des Hinweises auf die Patenterteilung: **04.03.1998**
(21) Anmeldenummer: 95929035.4
(22) Anmeldetag: 01.08.1995
(51) Int. Cl.: C04B 20/10, C04B 28/18, C04B 38/08

(54) **ANORGANISCHER LEICHTWERKSTOFF UND VERFAHREN ZU SEINER HERSTELLUNG**
INORGANIC LIGHTWEIGHT MATERIAL AND PROCESS FOR PRODUCING IT
MATERIAU LEGER INORGANIQUE ET SON PROCEDE DE PRODUCTION

(30) Priorität: 03.08.1994 DE 4427481
(43) Veröffentlichungstag der Anmeldung: 21.05.1997
(73) Patentinhaber: KOCH MARMORIT GmbH, 79283 Bollschweil (DE)
(72) Erfinder: TANK, Volker, D-79283 Bollschweil (DE)
(74) Vertreter: Werner, Hans-Karsten, Dr.Dipl.-Chem.
(86) Internationale Anmeldenummer: EP9503053
(87) Internationale Veröffentlichungsnummer: WO9604217

(56) Entgegenhaltungen:
- DE-A- 2 627 823
- FR-A- 1 533 660
- FR-A- 2 144 795
- US-A- 2 547 042
- US-A- 2 698 251
- US-A- 3 597 249
- CHEMICAL ABSTRACTS, vol. 107, no. 2, 13.Juli 1987 Columbus, Ohio, US; abstract no. 11780h, N.V. MESROPYAN ET AL. Seite 285; & PROM-ST. STROIT. ARKHIT. ARM., Bd. 12, 1986 RUSS., Seiten 32-33,

## Beschreibung

Gegenstand der vorliegenden Erfindung ist ein anorganischer Leichtwerkstoff, welcher aus Leichtzuschlägen und anorganischen Bindern herstellbar ist sowie das Verfahren zu seiner Herstellung. Weiterer Gegenstand der Erfindung ist ein Zwischenprodukt, welches in einfacher Weise zu diesem anorganischen Leichtwerkstoff verarbeitet werden kann.

Es ist bekannt, anorganische Binder wie Zemente und mit Wasser abbindende Calciumsulfate zu Leichtwerkstoffen zu verarbeiten. Ein Nachteil dieser Leichtwerkstoffe ist, daß sie nach dem Abbinden des Bindemittels -getrocknet werden müssen, da sie anderenfalls nicht ihre optimalen Eigenschaften aufweisen.

Die Erfindung hat sich die Aufgabe gestellt, anorganische Leichtwerkstoffe aus Leichtzuschlägen und anorganischen Binder herzustellen, die nach ihrer Fertigung unmittelbar eingesetzt werden können und keinem langwierigen-und kostspieligen Trocknungsprozeß unterworfen werden müssen. Dabei ist zu beachten, daß diese Leichtwerkstoffe bezüglich ihrer Eigenschaften mindestens die Qualität aufweisen müssen, die bisherige Leichtwerkstoffe besitzen.

Es wurde jetzt gefunden, daß es möglich ist, anorganische Leichtwerkstoffe herzustellen aus silikathaltigen Leichtzuschlägen, wenn man die Oberflächen dieser silikathaltigen Leichtzuschläge mit wäßrigem Erdalkalihydroxid in Kontakt bringt, wobei sich oberflächlich haftende Erdalkalisilikathydrate oder -gele bilden. Die Leichtzuschläge können nach Abtrennung der überschüssigen flüssigen Phase zu einem rieselfähigen Pulver getrocknet werden, welches problemlos gelagert, transportiert und schließlich zum Leichtwerkstoff verarbeitet werden kann. Dazu wird dieses Pulver in Formen eingefüllt und bei Temperaturen von 120°C bis 300°C, vorzugsweise 200 bis 250°C, mindestens 30 Minuten mit Wasserdampf behandelt. Hierbei verbindet sich das Pulver zu dem Leichtwerkstoff, in dem sich an den Berührungsflächen ein stabiles Gefüge aus verfilzten Nadeln ausbildet.

Weiterhin wurde gefunden, daß die Kontaktzeit zwischen den Leichtzuschlägen und dem wäßrigen Erdalkalihydroxid sogar auf die Zeit Null reduziert werden kann, wenn die Leichtzuschläge mit etwa der gleichen Gewichtsmenge feinvermahlenem trockenen Erdalkalihydroxid vermischt werden. Auch diese Gemische reagieren im Autoklaven unter den genannten hydrothermalen Bedingungen ähnlich wie die mit wäßrigen Erdalkalihydroxid vorbehandelten Pulver zu dem gewünschten Leichtwerkstoff.

Der erfindungsgemäße anorganische Leichtwerkstoff besteht somit vor allem aus einem hydrothermal bei 120°C bis 300°C, vorzugsweise bei 200 bis 250°C mit Wasserdampf verbundenen, in Formen gefüllten, trockenen Gemisch oder trockenen, rieselfähigen Pulver, welches an der Oberfläche haftende Erdalkalisilikathydrate und/oder -gele aufweist, die erhältlich sind durch Kontakt von silikathaltigen Leichtzuschlägen mit wäßrigen Erdalkalihydroxid, Abtrennung der überschüssigen flüssigen Phase und anschließendes Trocknen der festen Phase.

Der erfindungsgemäße anorganische Leichtwerkstoff weist im allgemeinen Rohdichten im Bereich zwischen 0,1 bis 1,0 kg/dm³ auf.

Als silikatischer Leichtzuschlag verwendbar sind vor allem Vermiculit, Bims, Perlit, Schaumglas und Gemische derselben, die unzerstört oder feinvermahlen sind. Geeignet sind auch die bei der Herstellung von geblähten Perliten und Vermiculiten anfallenden Feinfraktionen, die als unerwünschter Abfall jetzt gut verwertet werden können. Vorzugsweise wird dazu das Material vermahlen auf eine Korngröße 80 % unter 5 µm.

Als wäßriges Erdalkalihydroxid verwendbar sind vor allem Kalkhydrat, Dolomithydrat, Magnesiumhydrat aber auch Zemente oder Gemische derselben.

Als Zemente kommen prinzipiell alle Zemente in Frage, die im Kontakt mit Wasser Erdalkalihydroxid freisetzen, nämlich Portland-Zement, Tonerde-Zement, Tonerde-Schmelzzement aber auch Hochofenschlacke und alkalische Flugaschen, deren Alkalität vor allem auf Erdalkalihydroxide zurückzuführen ist.

Je nach Reaktionsfähigkeit und Reaktionsbedingungen bilden sich beim Kontakt an den Oberflächen dieser Leichtzuschlägen haftende Erdalkalisilikathydrate oder -gele aus. Die so vorbehandelten mit Erdalkalihydroxid gesumpften Leichtzuschläge können nach Entfernung der überschüssigen flüssigen Phase getrocknet werden zu rieselfähigen Pulvern. Das Trocknen kann dabei in Abhängigkeit von der Trocknungsart und der Trocknungsgeschwindigkeit zwischen Raumtemperatur und maximal 1.000°C geschehen, nämlich bei Temperaturen, bei denen sich die Erdalkalisilikathydrate und -gele noch nicht endgültig zu den wasserfreien Formen umwandeln.

Erstaunlicherweise sind die trockenen Gemische oder die zunächst naß hergestellten Pulver unter hydrothermalen Bedingungen (120°C bis 300°C, vorzugsweise 200 bis 250°C und Wasserdampfatmosphäre) in der Lage, an ihren Kontaktflächen ein stabiles Gefüge aus verfilzten Nadeln auszubilden, welches die Pulverteilchen miteinander verbindet. Diese Reaktion unter hydrothermalen Bedingungen benötigt im allgemeinen Zeiten von mindestens 30 Minuten, kann aber auch einige Stunden dauern. Nach dem Abkühlen erhält man in jedem Fall einen bereits trockenen Leichtwerkstoff, der die Form aufweist, die man dem Pulver vor der hydrothermalen Reaktion gegeben hat. Es ist somit auch durchaus möglich, diesen Leichtwerkstoff in größeren Blöcken herzustellen, die anschließend in kleinere Einheiten zersägt werden. Auf alle Fälle beträgt die Restfeuchte im allgemeinen nur noch bis zu 5 %, welche nicht mehr durch einen zusätzlichen Trockenschritt entfernt werden muß.

Ein weiterer Fortschritt der erfindungsgemäßen Leichtwerkstoffe ist, daß sie schwindfrei sind, so daß die gewünschte Form genau vorgegeben werden kann. Es ist somit nicht nötig, wie bei bisher bekannten Leichtwerkstoffen zu berücksichtigen, daß während des Abbindens ein Schwinden oder eine Ausdehnung stattfindet.

Die Rohdichte des erfindungsgemäßen Leichtwerkstoffs hängt auch davon ab, in welchem Umfang die ursprüngliche Struktur des Leichtzuschlages erhalten geblieben ist. Darüber hinaus hängt die Rohdichte von der Schüttdichte des Gemisches oder des trockenen rieselfähigen Pulvers in der Form ab. Es verbleiben nämlich im fertigen Leichtwerkstoff weitgehend die materialfreien Zwischenräume, die bereits das geschüttete oder verdichtete Pulver besitzt.

Selbstverständlich ist es möglich, dem erfindungsgemäßen Leichtwerkstoff organische oder anorganische faserförmige Stoffe zuzusetzen, die die physikalischen Eigenschaften des fertigen Leichtwerkstoffs verbessern. Entscheidend ist aber, daß während des hydrothermalen Prozesses ausreichende Kontaktflächen zwischen den Pulverteilchen bestehen, so daß diese durch das Gefüge von verfilzten Nadeln miteinander verbunden werden. Unter Berücksichtigung dieser Bedingungen ist es aber durchaus möglich, dem Pulver auch andere Zuschläge organischer oder anorganischer Substanzen beizumischen, die die endgültigen Eigenschaften des Leichtwerkstoffes modifizieren.

Das Verfahren zur Herstellung der Leichtwerkstoffe besteht darin, daß entweder die feinvermahlenen silikatischen Leichtzuschläge mit etwa der gleichen Gewichtsmenge feinvermahlenen Erdalkalihydroxid vermischt, oder die Oberflächen der silikathaltigen Leichtzuschläge zunächst mit wäßrigen Erdalkalihydroxid so in Kontakt gebracht werden, daß sich oberflächlich haftende Erdalkalisilikathydrate oder -gele bilden, danach die überschüssige flüssige Phase abgetrennt und die Leichtzuschläge als feste Phase zu einem rieselfähigen Pulver getrocknet und danach entweder das trockene Gemisch oder das getrocknete Pulver in Formen eingefüllt und bei Temperaturen von 120°C bis 300°C mindestens 30 Minuten mit Wasserdampf behandelt wird, wobei das Gemisch oder das Pulver zu dem Leichtwerkstoff verbunden wird.

Als Zwischenprodukt dieses Verfahrens einsetzbar ist somit das hydrothermal verklebbare, trockene, rieselfähige Pulver, welches an der Oberfläche haftende Erdalkalisilikathydrate oder -gele aufweist, die erhältlich sind durch Kontakt von silikathaltigen Leichtzuschlägen mit wäßrigem Erdalkalihydroxid und anschließendem Trocknen.

Die erste Stufe des erfindungsgemäßen Verfahrens, nämlich die Reaktion der Oberflächen der silikathaltigen Leichtzuschläge mit wäßrigem Erdalkalihydroxid dauert in besonders günstigen Fällen nur wenige Minuten. Es kann sogar in die Aufheizphase der hydrothermalen Behandlung eines trockenen Gemisches aus feinvermahlenem Leichtzuschlag und feinvermahlenem Erdalkalihydroxid verlagert werden. Diese Stufe kann aber auch in anderen Fällen mehrere Monate benötigen, nämlich, wenn das eingesetzte grobkörnige Silikat mit dem verwendeten wäßrigen Erdalkalihydroxid nur sehr langsam zu Erdalkalisilikathydraten oder -gelen reagiert. Während dieser Einsumpfzeit kann gegebenenfalls durch vorsichtiges Umrühren homogenisiert werden. Insbesondere, wenn sehr niedrige Rohdichten angestrebt werden, sollte darauf geachtet werden, daß dabei die Struktur des eingesetzten grobkörnigen Leichtzuschlages möglichst wenig zerstört wird. In einigen Fällen kann es von Vorteil sein, dem wäßrigen Erdalkalihydroxid mit Wasser mischbare organische Lösungsmittel zuzusetzen. Geeignet sind niedere Alkohole wie Methanol, Ethanol, Propanole und Aceton.

Die zweite Stufe des erfindungsgemäßen Verfahrens ist die Abtrennung der überschüssigen flüssigen Phase und das Trocknen. Die Abtrennung der überschüssigen flüssigen Phase kann durch Sieben, Zentrifugieren und einfaches Dekantieren erfolgen. Es stört die anschließende Trocknung und die Eigenschaften des Endproduktes nicht, wenn gewisse Mengen flüssiger Phase anhaften bleiben. Das Trocknen kann in üblicher Weise erfolgen in Trockenschränken, Öfen oder sonstigen Trocknungseinrichtungen wie Mikrowellen, die ein mechanisch schonendes Trocknen gestatten. Eine thermische Schonung beim Trocknen ist nicht erforderlich, sofern dafür gesorgt wird, daß die Teilchen nicht soweit erhitzt werden, daß sich die zunächst gebildeten Erdalkalisilikathydrate oder -gele thermisch zersetzen. Dies ist im allgemeinen gewährleistet, wenn vermieden wird, die Teilchen über 1.000°C zu erhitzen. Erstaunlicherweise kann somit der Trocknungsprozeß bei Temperaturen erfolgen, die deutlich über den Temperaturen liegen, die in der letzten Stufe, nämlich der hydrothermalen Behandlung, zum Einsatz kommen. Die hydrothermale Verbindung der Teilchen erfolgt vorzugweise bei einer Reaktionstemperatur zwischen 200°C und 250°C. Bei Temperaturen unter 120°C ist das Wachstum der Kristalle zu langsam. Bei Temperaturen über 300°C kommt es unter den hydrothermalen Bedingungen zu einer raschen Umwandlung der Erdalkalisilikathydrate oder -gele zu Strukturen, die nicht mehr in der Lage sind, an den Kontaktstellen ein stabiles Gefüge aus verfilzten Nadeln auszubilden.

Die erfindungsgemäßen Leichtwerkstoffen weisen eine von der Rohdichte abhängige Wärmeleitfähigkeit auf. Es ist ohne weiteres möglich, den Bereich von 0,03 bis 0,1 W/m*K zu erreichen. Als Formen für den Leichtwerkstoff kommen insbesondere Platten oder Steine in Frage. Es ist aber erfindungsgemäß ohne weiteres möglich, auch runde oder verwinkelte Formen herzustellen, die dann bei der Verarbeitung in einfacher Weise Sonderaufgaben erfüllen können.

Bei einer besonders einfachen aber erfindungsgemäß sehr typischen Ausführung wird gemahlener oder nicht gemahlener geblähter Perlit in wäßrigem Calciumhydroxid einige Tage gesumpft. Nach dem vorsichtigen mechanischen Entfernen der überschüssigen flüssigen Phase wird der Perlit mit einer oberflächlich haftenden Schicht aus Erdalkalisilikathydrat und/oder -gel getrocknet, wobei mechanisch schonende Bedingungen zur Anwendung kommen. Das so erhaltene trockene, rieselfähige Pulver wird in Formen gefüllt und bei Temperaturen zwischen 120°C bis 300°C mindestens 30 Minuten mit Wasserdampf behandelt. Dabei verbinden sich die Teilchen zu dem Leichtwerkstoff. Die Untersuchung des neuen Leichtwerkstoffes zeigte, daß sich an den Berührungsflächen ein stabiles Gefüge aus verfilzten Nadeln ausgebildet hat, welches die Teilchen ausreichend fest miteinander verbindet. Die so erhaltenen Körper aus Leichtwerkstoff können gesägt werden. Sie weisen Dichten deutlich unter 1,0 kg/dm³ auf. Bei Erhalt der grobkörnigen Perlitestruktur liegt die Rohdichte bei 0,15 kg/dm³. Bei einer weiteren Ausführungsform wird feinstvermahlener Perlitestaub mit etwa der gleichen Gewichtsmenge an feinvermahlenem, trockenem Calciumhydroxid vermischt. Auch dieses trockene Gemisch liefert bei hydrothermaler Behandlung einen guten Leichtwerkstoff, dessen Dichte jedoch höher liegt, nämlich im Bereich von 0,25 bis 0,35 kg/dm³. Die Korngrößen des Leichtzuschlags und des Calciumhydroxids lagen dabei 80 % unter 5 µm.

## Patentansprüche

1. Anorganischer Leichtwerkstoff bestehend aus einem hydrothermal bei 120°C bis 300°C mit Wasserdampf verbundenen, in Formen gefüllten Gemisch aus feinvermahlenem Leichtzuschlag und etwa der gleichen Gewichtsmenge feinvermahlenem Erdalkalihydroxid oder einem trockenen, rieselfähigen Pulver, welches an der Oberfläche haftende Erdalkalisilikathydrate und/oder -gele aufweist, die erhältlich sind durch Kontakt von silikathaltigen Leichtzuschlägen mit wäßrigen Erdalkalihydroxid, Entfernung der überschüssigen flüssigen Phase und anschließendes Trocknen der festen Phase.

2. Anorganischer Leichtwerkstoff gemäß Anspruch 1, dadurch gekennzeichnet, daß die Rohdichte im Bereich von 0,1 bis 1,0 kg/dm³ liegt.

3. Anorganischer Leichtwerkstoff gemäß Anspruch 1 oder 2, dadurch gekennzeichnet, daß als silikatischer Leichtzuschlag verwendet wurde Vermiculit, Bims, Perlit, Schaumglas oder Gemische derselben.

4. Anorganischer Leichtwerkstoff gemäß einem der Ansprüche 1 bis 3, dadurch gekennzeichnet, daß als wäßriges Erdalkalihydroxid verwendet wurde Kalkhydrat, Dolomithydrat, Magnesiumhydrat, Zemente oder Gemische derselben.

5. Verfahren zur Herstellung eines anorganischen Leichtwerkstoffes aus silikathaltigen Leichtzuschlägen und anorganischen Bindern, dadurch gekennzeichnet, daß entweder die feinvermahlenen silikatischen Leichtzuschläge mit etwa der gleichen Gewichtsmenge feinvermahlenem Erdalkalihydroxid vermischt oder die Oberflächen der silikatischen Leichtzuschläge zunächst mit wäßrigem Erdalkalihydroxid so in Kontakt gebracht werden, daß sich oberflächlich haftende Erdalkalisilikathydrate oder -gele bilden, danach die überschüssige flüssige Phase abgetrennt und die Leichtzuschläge als feste Phase zu einem rieselfähigen Pulver getrocknet und danach entweder das trockene Gemisch oder das getrocknete Pulver in Formen eingefüllt und bei Temperaturen von 120°C bis 300°C mindestens 30 Minuten mit Wasserdampf behandelt wird, wobei das Gemisch oder das Pulver zu dem Leichtwerkstoff verbunden wird.

6. Verfahren gemäß Anspruch 5, dadurch gekennzeichnet, daß dem wäßrigen Erdalkalihydroxid mit Wasser mischbare organische Lösungsmittel zugesetzt werden.

7. Verfahren gemäß Anspruch 6, dadurch gekennzeichnet, daß das Lösungsmittel ein niedere Alkohol oder Aceton ist.

8. Hydrothermal verklebares, trockenes, rieselfähiges Pulver, welches an der Oberfläche haftende Erdalkalisilikathydrate oder -gele aufweist, die erhältlich sind durch Kontakt von silikathaltigen Leichtzuschlägen mit wäßrigem Erdalkalihydroxid und anschließendem Trocknen.

## Claims

1. An inorganic light-weight material consisting of a mixture, hydrothermally bound with steam at 120°C to 300°C and filled in molds, of finely ground light-weight aggregate and about the same weight quantity of finely ground alkaline earth hydroxide or a dry free-flowing powder which has alkaline earth silicate hydrates and/or gels adhering to its surface which are obtainable by contacting silicate-containing light-weight aggregates with aqueous alkaline earth hydroxide, removing the excess liquid phase and then drying the solid phase.

2. The inorganic light-weight material according to claim 1, characterized in that its bulk density is in the range of from 0.1 to 1.0 kg/dm³.

3. The inorganic light-weight material according to claim 1 or 2, characterized in that vermiculite, pumice, perlite, foam glass or mixtures thereof are employed as said silicate light-weight aggregate.

4. The inorganic light-weight material according to any of claims 1 to 3, characterized in that lime hydrate, dolomite hydrate, magnesium hydrate, cements or mixtures thereof are employed as said aqueous alkaline earth hydroxide.

5. A process for the preparation of an inorganic light-weight material from silicate-containing light-weight aggregates and inorganic binders, characterized in that either said silicate light-weight aggregates, in a finely ground condition, are mixed with about the same weight quantity of finely ground alkaline earth hydroxide, or the surfaces of said silicate light-weight aggregates are first contacted with aqueous alkaline earth hydroxide to form superficially adhering alkaline earth silicate hydrates or gels, the excess liquid phase is then removed and the light-weight aggregates, as a solid phase, are dried to a free-flowing powder, followed by filling either the dry mixture or the dried powder in molds and treating with steam at temperatures of from 120°C to 300°C for at least 30 minutes, wherein said mixture or said powder is bound to yield said light-weight material.

6. The process according to claim 5, characterized in that water-miscible organic solvents are added to said aqueous alkaline earth hydroxide.

7. The process according to claim 6, characterized in that said solvent is a lower alcohol or acetone.

8. A hydrothermally bondable, dry, free-flowing powder having alkaline earth silicate hydrates or gels adhering to its surface which are obtainable by contacting silicate-containing light-weight aggregates with aqueous alkaline earth hydroxide, followed by drying.

## Revendications

1. Matériau léger inorganique formé d'un mélange, introduit dans des moules et lié avec de la vapeur d'eau par voie hydrothermique à une température de 120°C à 300°C, constitué d'un agrégat léger finement broyé et d'une quantité en poids à peu près identique d'un hydroxyde alcalino-terreux finement broyé, ou d'une poudre sèche coulante qui présente des hydrates et/ou des gels de silicates alcalino-terreux adhérents en surface, qu'on peut obtenir par mise en contact d'agrégats légers contenant des silicates avec un hydroxyde alcalino-terreux aqueux, élimination de la phase aqueuse en excès et séchage subséquent de la phase solide.

2. Matériau léger inorganique selon la revendication 1, caractérisé en ce que sa masse volumique apparente est comprise entre 0,1 et 1,0 kg/dm³.

3. Matériau léger inorganique selon la revendication 1 ou 2, caractérisé en ce qu'on utilise de la vermiculite, de la pierre ponce, de la perlite, du verre mousse, ou des mélanges de ceux-ci, comme agrégat léger contenant des silicates.

4. Matériau léger inorganique selon l'une des revendications 1 à 3, caractérisé en ce qu'on utilise de l'hydrate de chaux, de l'hydrate de dolomie, de l'hydrate de magnésium, des ciments, ou des mélanges de ceux-ci, comme hydroxyde alcalino-terreux aqueux.

5. Procédé de préparation d'un matériau léger inorganique à base d'agrégats légers contenant des silicates et de liants inorganiques, caractérisé en ce que soit on mélange les agrégats légers contenant des silicates et finement broyés avec une quantité en poids à peu près identique d'un hydroxyde alcalino-terreux finement broyé, soit on amène d'abord les surfaces des agrégats légers contenant des silicates au contact de l'hydroxyde alcalino-terreux aqueux de telle façon que des hydrates ou des gels de silicates alcalino-terreux adhérents se forment à la surface, et, ensuite, on sépare la phase liquide en excès, on sèche les agrégats légers, en tant que phase solide, pour obtenir une poudre coulante, et, ensuite, on introduit le mélange sec ou la poudre sèche dans des moules et on le (la) traite avec de la vapeur d'eau à des températures de 120°C à 300°C, pendant au moins 30 minutes, le mélange ou la poudre étant lié(e) en le matériau léger.

6. Procédé selon la revendication 5, caractérisé en ce qu'on ajoute des solvants organiques miscibles avec l'eau à l'hydroxyde alcalino-terreux aqueux.

7. Procédé selon la revendication 6, caractérisé en ce que le solvant est un alcool inférieur ou l'acétone.

8. Poudre coulante, sèche, pouvant être collée par voie hydrothermique, qui présente des hydrates et/ou des gels adhérents en surface, qu'on peut obtenir par mise en contact d'agrégats contenant des silicates avec un hydroxyde alcalino-terreux, suivie d'un séchage.
